# EUROPÄISCHE PATENTSCHRIFT

(11) **EP 1 423 617 B1**
(45) Veröffentlichungstag und Bekanntmachung des Hinweises auf die Patenterteilung: **07.03.2007**
(21) Anmeldenummer: 02777022.1
(22) Anmeldetag: 06.09.2002
(51) Int. Cl.: F16B 2/22, F16L 3/22

(54) **HALTECLIP MIT VERSETZTEN RASTFINGERN**
RETAINING CLIP WITH OFFSET LOCKING FINGERS
CLIP DE FIXATION DOTE DE DOIGTS D'ENCLIQUETAGE DECALES

(30) Priorität: 07.09.2001 DE 10144153
(43) Veröffentlichungstag der Anmeldung: 02.06.2004
(73) Patentinhaber: Newfrey LLC, Newark, Delaware 19711 (US)
(72) Erfinder: STIGLER, Mario, 35641 Schöffengrund (DE)
(74) Vertreter: Haar, Lucas Heinz Jörn
(86) Internationale Anmeldenummer: PCT/EP2002/010008
(87) Internationale Veröffentlichungsnummer: WO 2003/023236

(56) Entgegenhaltungen:
- EP-A- 0 683 343
- FR-A- 2 609 507
- US-A- 4 114 241
- US-A- 5 807 018
- US-B1- 6 216 987
- PATENT ABSTRACTS OF JAPAN vol. 1998, no. 04, 31. März 1998 (1998-03-31) & JP 09 317946 A (PIOLAX INC), 12. Dezember 1997 (1997-12-12)
- DATABASE WPI Section PQ, Week 200270 Derwent Publications Ltd., London, GB; Class Q67, AN 2002-651398 XP002225552 & JP 2002 235872 A (SANOH KOGYO KK), 23. August 2002 (2002-08-23)

## Beschreibung

Die Erfindung betrifft einen Halteclip zum Befestigen einer Mehrzahl von etwa parallel verlaufenden länglichen Gegenständen an einer Struktur, insbesondere von Leitungen, Rohren oder Kabeln, mit einem Basisteil, in dem Aufnahmen für die länglichen Gegenstände ausgebildet sind, mit mindestens einer Zwischenwand zwischen zwei solchen Aufnahmen, die eine Vorderseite und eine Rückseite ausweist, wobei zur Sicherung der länglichen Gegenstände in den Aufnahmen mindestens ein erster Rastfinger an der Vorderseite und mindestens ein zweiter Rastfinger an der Rückseite der Zwischenwand vorhanden sind.

Mit den bekannten Halteclips werden insbesondere Bremsleitungen und Kabel im Automobilbereich auf eine einfache und preiswerte Weise befestigt. Mit Sperrfingern wird ein unerwünschtes Lösen der Gegenstände bei Erschütterungen oder Vibrationen verhindert. Die Sperrfinger erlauben nur eine Bewegung des Gegenstandes in Montagerichtung, sie versperren sich bei einer Bewegung in die entgegengesetzte Richtung. Sie leisten beim Einbringen des Gegenstandes in Montagerichtung nur einen geringen Widerstand, und stellen ein großes Hindernis dar, wenn der Gegenstand entgegen der Montagerichtung entfernt werden soll. Aufgrund der seit Jahren bekannten Technologie ist die Fertigung solcher Halteclips vergleichsweise kostengünstig.

Bekannte Halteclips haben jedoch folgende Nachteile:

Zum einen müssen gegenüberliegende Sperrfinger in einem bestimmten Mindestabstand zueinander angeordnet werden, damit ein genügend leichter Durchlaß des zu fixierenden Gegenstandes ermöglicht wird. Bei Mehrfachaufnahmen addieren sich diese Mindestabstände und es entsteht ein relativ großer Raumbedarf des Halteclips.

Zum anderen verbreitert sich der Halteclip, wenn ein Gegenstand eingebracht werden soll. Beim Einbringen des Gegenstands werden die Rastfinger zusammengedrückt, welches eine Aufspreizung des Haltclips bewirkt. Dieses ist insbesondere besonders nachteilig, wenn mehrere Gegenstände gleichzeitig, insbesondere in einem Arbeitsschritt, in den Halteclip eingebracht werden sollen, da sich der zusätzlich benötigte Raumbedarf aufaddiert. Aufgrund der Verformung des Halteclips ist ein gleichzeitiges Einbringen von mehreren Gegenständen schwierig bzw. unmöglich. Die Aufspreizung ist insbesondere dann ausgeprägt, wenn der Halteclip kompakt gebaut ist.

Bei bekannten Halteclipgeometrien konnte man nur zwischen zwei nachteiligen Varianten wählen. Entweder wies der Halteclip große Abstände zwischen den Sperrfingern auf, dann war die Aufspreizung zwar gering, doch der Halteclip war sehr groß. Oder der Halteclip wurde mit minimalen Abständen zwischen den Sperrfingern versehen, dann war der Raumbedarf des Halteclips zwar klein, doch war die Aufspreizung beim Einbringen der Gegenstände so groß, daß ein gleichzeitiges Einbringen mehrerer Gegenstände schwierig bzw. unmöglich war.

Aus JP 09-317946 A ist ein dem Oberbegriff des Anspruchs 1 zugrunde liegender Halteclip bekannt, bei dem die Zwischenwand durch einen mittigen Schlitz in zwei Abschnitte unterteilt ist, wobei der eine Abschnitt auf der einen Seite und der andere Abschnitt auf der anderen Seite jeweils einen Rastfinger trägt, der sich in Richtung der jeweiligen Aufnahme für längliche Gegenstände erstreckt. Die beiden Abschnitte der Zwischenwand befinden sich hierbei in einer gemeinsamen Ebene, so daß für die Verformung der Rastfinger auf beiden Seiten der Zwischenwand ein zusätzlicher Raum benötigt wird, der sich auf die Größe des Halteclips ungünstig auswirkt.

Es ist daher Aufgabe der vorliegenden Erfindung, einen besonders kompakten Halteclip zu schaffen, der während des gleichzeitigen Einbaus mehrerer Gegenstände nur einen geringen zusätzlichen Platzbedarf erfordert bzw. nur eine geringe Aufspreizung aufweist.

Diese Aufgabe wird gelöst durch einen erfindungsgemäßen Halteclip gemäß den Merkmalen des Anspruchs 1. Weitere Ausgestaltungen, die einzeln oder in Kombination auftreten können, sind Gegenstand der Unteransprüche.

Der erfindungsgemäße Halteclip zur insbesondere gleichzeitigen Befestigung einer Mehrzahl von etwa parallel verlaufenden länglichen Gegenständen an einer Struktur, insbesondere von Leitungen, Rohren oder Kabeln, mit einem Basisteil, in dem Aufnahmen für die länglichen Gegenstände ausgebildet sind, mit mindestens einer Zwischenwand zwischen zwei solchen Aufnahmen, die eine Vorderseite und eine Rückseite aufweist, wobei zur Sicherung der länglichen Gegenstände in den Aufnahmen mindestens ein erster Rastfinger an der Vorderseite und mindestens ein zweiter Rastfinger an der Rückseite der Zwischenwand vorhanden ist, wobei die Breite jedes Rastfingers kleiner als die Breite der Zwischenwand ist und der erste Rastfinger gegenüber dem zweiten Rastfinger so versetzt angeordnet ist, daß sich keine Überlappung ergibt, ist dadurch gekennzeichnet, daß die Zwischenwand zwischen den versetzten Rastfingern derart gekröpft ist, daß durch die Kröpfung ausreichend Raum für ein Zurückweichen der Rastfinger während des Einsetzens bereitgestellt wird. Die Kröpfung reduziert zum einen die Größe des Halteclips, da die Tiefe der Kröpfung zweifach, von zwei Rastfingern genutzt werden kann, zum anderen die Aufspreizung des Halteclips beim Einsetzen, da die Rastfinger beim Einsetzen der Gegenstände in der Kröpfung verschwinden können.

Durch die seitlich versetzte Anordnung der Rastfinger wird erreicht, daß die Rastfinger nur an einer Seite der Zwischenwand zurückfedern müssen. Durch das versetzte Anordnen benachbarter Rastfinger wird die Aufweitung des Halteclips bei dem gleichzeitigen Einbringen mehrerer Gegenstände reduziert. Insbesondere wird ein Teil der Aufspreizung des Halteclips in eine Drehbewegung der einzelnen Zwischenwände umgesetzt, welches sich vorteilhaft auf den zusätzlichen Platzbedarf des Halteclips auswirkt. Durch die erfindungsgemäße Anordnung der Rastfinger können mehr Rastfinger angeordnet werden, was zu einer größeren Sicherheit führt.

Mit Hilfe des Basisteils wird der Halteclip in an sich bekannter Weise an einer Struktur, z.B. im Automobilbau an der Karosserie eines Fahrzeuges, befestigt. Die länglichen Gegenstände werden von der Aufnahme erfasst und mit Hilfe der Rastfinger gegen unerwünschtes Lösen gesichert. Mit Hilfe der Zwischenwände können mehrere Gegenstände von dem selben Halteclip gehaltert werden.

In einer vorteilhaften Weiterbildung des erfindungsgemäßen Halteclips ist der erste Rastfinger seitlich versetzt zum zweiten Rastfinger angeordnet. Durch die seitliche Anordnung wird eine vorteilhafte Drehbewegung der Zwischenwand beim Einsetzen der Gegenstände bewirkt. Vorteilhafterweise beträgt der Abstand zwischen den beiden Rastfingern 5 bis 20 % der Breite der Zwischenwand, vorzugsweise 10 bis 15 % der Breite der Zwischenwand. Durch den Abstand zwischen den beiden benachbarten Rastfingern wird erreicht, daß sich zwei benachbarte Rastfinger nur wenig beeinflussen, und somit eine unnötige Aufspreizung des Halteclips beim Einsetzen mehrerer Gegenstände in die jeweiligen Aufnahmen vermieden wird.

In einer speziellen Ausgestaltung der Erfindung weist die Zwischenwand eine Öffnung, insbesondere einen Schlitz auf Durch die Öffnung insbesondere den Schlitz, sind benachbarte Rastfinger voneinander weitgehend unabhängig. Hiermit wird bewirkt, daß der Halteclip eine zusätzliche Elastizität gewinnt, welches sich beim Einbringen der Gegenstände in einem verringerten Widerstand in Montagerichtung äußert. Die Fähigkeit der Rastfinger, die Gegenstände vor unerwünschtem Lösen zu sichern, bleibt hiervon unberührt.

In einer bevorzugten Ausgestaltung der Erfindung sind auf beiden Seiten der Zwischenwand jeweils zwei oder mehr höhenversetzte Rastfinger angeordnet. Durch die Anordnung mehrerer, höhenversetzter Rastfinger wird eine zusätzliche Sicherung vor Lösen des Gegenstandes von der Aufnahme erzielt. Selbst wenn ein einzelner Rastfinger seine Funktion nicht mehr erfüllen kann, stehen weitere bereit, die ein Lösen verhindern.

Vorteilhafterweise liegt das Verhältnis der Breite eines einzelnen Rastfingers zur Breite der Zwischenwand gemäß der Erfindung zwischen 1:4 und 1:2, insbesondere beträgt das Verhältnis etwa 2:5. Durch dieses Verhältnis wird das Sicherungsvermögen der Rastfinger, unter der Bedingung einer minimalen Aufspreizung des Haltclips beim gleichzeitigen Einsetzen mehrerer Gegenstände in vorteilhafter Weise maximiert.

Gemäß der Erfindung weist der Halteclip Außenwände auf, die zur Sicherung der länglichen Gegenstände mindestens einen Rastfinger enthalten. Die Außenwände haben somit in ähnlicher Weise eine Sicherungsfunktion wie die Zwischenwände.

Vorteilhafterweise sind die Außenwände mit Verstärkungsstrukturen versehen. Die Verstärkungsstrukturen wirken einer Aufweitung des Halteclips beim Einsetzen der Gegenstände entgegen, indem sie die Rastfinger stärker zwingen sich elastisch zu verformen. Trotz einer derartigen Reduzierung der Aufspreizung des Halteclips wird ein gleichzeitiges Einbringen mehrerer Gegenstände aufgrund der erfindungsgemäßen Anordnung der Haltefinger ermöglicht.

Vorteilhafterweise ist der erfindungsgemäße Halteclip aus elastischem Material gefertigt, insbesondere aus Kunststoff Mit Hilfe einer Kunststoffspritztechnik werden erfindungsgemäße Halteclips auf einfache und preiswerte Weise hergestellt.

Weitere Besonderheiten und vorteilhafte Ausgestaltungen, die einzeln oder in Kombination auftreten können, werden anhand der folgenden Zeichnungen erläutert. Die Zeichnung soll die Erfindung nicht einschränken, sondern nur exemplarisch verdeutlichen.

Es zeigen schematisch:
- Fig. 1: einen erfindungsgemäßen Halteclip in perspektivischer Ansicht; und
- Fig. 2: den Halteclip nach Fig. 1 in einer Schnittunteransicht entlang der Linie II-II.

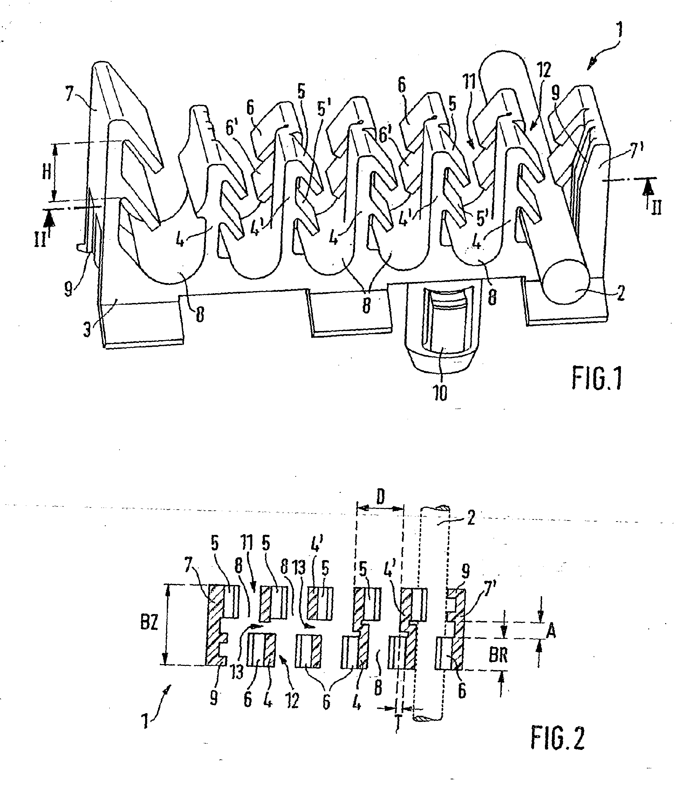

Figur 1 zeigt einen erfindungsgemäßen Halteclip 1 in perspektivischer Ansicht schräg von oben. Der erfindungsgemäße Halteclip 1 weist ein Basisteil 3 auf, welches mit einer Basisteilaufnahme 10 an einer Struktur (nicht abgebildet) befestigt werden kann. An dem Basisteil 3 sind Außenwände 7, 7' und Zwischenwände 4, 4' befestigt, die jeweils Aufnahmen 8 für zu befestigende Gegenstände (2) bilden. Die Zwischenwände 4, 4' weisen Rastfinger 5, 5', 6, 6' auf, die in Richtung der jeweiligen Aufnahmen 8 zeigen. Mit Hilfe der Rastfinger 5, 5', 6, 6' wird ein in der Aufnahme 8 befindlicher Gegenstand 2 gegen unerwünschtes Lösen gesichert.

Die Zwischenwände 4, 4' weisen jeweils eine Vorderseite 12 und eine Rückseite 11 auf. Auf der Vorderseite 12 sind erste Rastfinger 5, 5' und auf der Rückseite 11 zweite Rastfinger 6, 6' angeordnet. Benachbarte Rastfinger 5 und 6 beziehungsweise 5' und 6' sind seitlich versetzt angeordnet, so daß sich - betrachtet aus der Längsrichtung des Halteclips 1 - keine Überlappung, die unnötigerweise Platz beanspruchen würde, ergibt. Die Zwischenwände 4, 4' weisen an ihren jeweiligen Seiten jeweils zwei höhenversetzte Rastfinger 6, 6' beziehungsweise 5, 5' auf, die eine zusätzliche Sicherheit gegen ein unerwünschtes Lösen des Gegenstandes bieten.

Die Zwischenwände 4, 4' sind zwischen den versetzten Rastfingern 5, 6 beziehungsweise 5', 6' gekröpft. Die Kröpfung gibt zum einen den Rastfingern 5,6 ausreichend Raum zum Ausweichen, wenn die Gegenstände eingesetzt werden, zum anderen reduziert sie die erforderliche Mindestgröße des Halteclips 1.

Die Außenwände 7, 7' weisen Verstärkungsstrukturen 9 auf, die ein Aufbiegen der Seitenwände 7, 7' reduzieren. Der Höheversatz H zwischen den Rastfingern 5 und 5' beziehungsweise zwischen 6 und 6' entspricht in etwa dem Durchmesser des zu befestigenden und in der Aufnahme 8 zu haltenden Gegenstandes. Der Halteclip 1 ist aus elastischem und besonders robustem Kunststoff gefertigt.

Fig. 2 zeigt den Halteclip 1 nach Fig. 1 in einer Schnittunteransicht entlang der Linie II-II. Der Gegenstand 2 (gepunktet dargestellt) wird in einer Aufnahme 8, die von einer Zwischenwand 4' und einer Außenwand 7' gebildet wird, gehalten. Die Zwischenwand 4', 4 weist eine Vorderseite 12 und eine Rückseite 11 auf. Auf der Vorderseite 12 sind erste Rastfinger 5, auf der Rückseite 11 sind zweite Rastfinger 6 befestigt. Mit Hilfe der Rastfinger 5, 6 wird der Gegenstand 2 vor unerwünschtem Lösen von der Aufnahme 8 gesichert.

Die Zwischenwände 4, 4' sind gekröpft, wobei die Tiefe T der Kröpfung in etwa der Materialstärke der Rastfinger 5, 6 entspricht. Durch die Kröpfung wird dem Rastfinger 5, 6 beim Einbringen des Gegenstandes 2 ausreichend Raum geboten, um bei der elastischen Verformung des Rastfingers 5, 6 auszuweichen. Darüber hinaus bietet die Kröpfung Platzersparnis für den Halteclip 1. Die Breite BR der einzelnen Rastfinger 5, 6 verhält sich zur Breite BZ der Zwischenwand 4, 4' etwa wie 2:5.

Die Außenwände 7, 7' weisen Verstärkungsstrukturen 9 auf, mit denen eine zusätzliche Steifigkeit der Außenwände 7, 7' bewirkt wird. Durch die zusätzliche Steifigkeit wird bewirkt, daß beim gleichzeitigen Einsetzen mehrerer Gegenstände 2 die Rastfinger 5, 6 stärker plastisch verformt werden und somit Platz gespart wird, bzw. eine Aufspreizung reduziert wird.

Beim gleichzeitigen Einbringen mehrerer Gegenstände 2 in den erfindungsgemäßen Halteclip 1 wird durch die versetzt angeordneten Rastfinger 5, 6 eine Aufweitung des Halteclips 1 verringert, da ein Teil der Aufweitung in eine Drehbewegung der Zwischenwände 4, 4' übergeht. Ein weiterer Teil der Aufweitung wird von den Rastfingern 5, 6 aufgenommen, die ausreichend viel Platz zum Ausweichen durch die Kröpfung haben.

Zur Erhöhung der Elastizität der Zwischenwand 4, 4' sind Öffnungen 13 in der Zwischenwand 4, 4' vorhanden. Die Öffnungen 13 bewirken, daß die ersten Rastfinger 5 im stärkeren Maß unabhängig von dem zweiten Rastfinger 6 sind, wodurch ein Einsetzen mehrerer Gegenstände 2 erleichtert wird. Der Abstand A zwischen dem ersten Rastfinger 5 und dem zweiten Rastfinger 6 beträgt vorzugsweise 10 bis 15 % der Breite BZ der Zwischenwand 4, 4'. Die Außenwände 7, 7' tragen zur Sicherung bei, indem sie jeweils einen Rastfinger 5, 6 aufweisen.

Der erfindungsgemäße Halteclip 1, zur insbesondere gleichzeitigen Befestigung einer Mehrzahl von etwa parallel verlaufenden länglichen Gegenständen 2 an einer Struktur (nicht abgebildet), insbesondere von Leitungen, Rohren oder Kabeln, mit einem Basisteil 3, in dem Aufnahmen 8 für die länglichen Gegenstände 2 ausgebildet sind, mit mindestens einer Zwischenwand 4, 4' zwischen zwei solchen Aufnahmen 8, die eine Vorderseite 12 und eine Rückseite 11 aufweist, wobei zur Sicherung der länglichen Gegenstände 2 in den Aufnahmen 8 mindestens ein erster Rastfinger 5 an der Vorderseite 12 und mindestens ein zweiter Rastfinger 6 an der Rückseite 11 der Zwischenwand 4, 4' vorhanden ist, zeichnet sich dadurch aus, daß die Breite BR jedes Rastfingers kleiner als die Breite BZ der Zwischenwand 4, 4' ist und der erste Rastfinger 5 gegenüber dem zweiten Rastfinger 6 so versetzt angeordnet ist, daß sich keine Überlappung ergibt. Die seitlich versetzten Rastfinger 5, 6 erlauben eine besonders kompakte Bauweise des Halteclips 1, der es möglich macht, gleichzeitig eine Mehrzahl von Gegenständen in dem Halteclip 1 anzubringen, ohne daß der Halteclip 1 wesentlich aufgespreizt wird, wodurch auf eine einfache Weise die Befestigung einer Mehrzahl von Gegenständen ermöglicht wird.

### Bezugszeichenliste

- 1: Halteclip
- 2: Gegenstand
- 3: Basisteil
- 4, 4': Zwischenwand
- 5, 5': erster Rastfinger
- 6, 6': zweiter Rastfinger
- 7,7': Außenwand
- 8: Aufnahme
- 9: Verstärkungsstruktur
- 10: Basisteilaufnahme
- 11: Rückseite
- 12: Vorderseite
- 13: Öffnungen

- BR: Breite der einzelnen Rastfinger 5, 6
- BZ: Breite der Zwischenwand 4, 4'
- T: Tiefe der Kröpfung
- D: Abstand zweier Zwischenwände 4, 4'
- H: Höhenversatz zwischen den Rastfingern 5 und 5' bzw. zwischen 6 und 6'
- A: Abstand

## Patentansprüche

1. Halteclip (1) zur insbesondere gleichzeitigen Befestigung einer Mehrzahl von etwa parallel verlaufenden länglichen Gegenständen (2) an einer Struktur, insbesondere von Leitungen, Rohren, oder Kabeln, mit einem Basisteil (3), in dem Aufnahmen (8) für die länglichen Gegenstände (2) ausgebildet sind, mit mindestens einer Zwischenwand (4, 4') zwischen zwei solchen Aufnahmen (8), die eine Vorderseite (12) und eine Rückseite (11) aufweist, wobei zur Sicherung der länglichen Gegenstände (2) in den Aufnahmen (8) mindestens ein erster Rastfinger (5) an der Vorderseite (12) und mindestens ein zweiter Rastfinger (6) an der Rückseite (11) der Zwischenwand (4, 4') vorhanden ist, wobei die Rastfinger (5, 6) in Richtung der jeweiligen Aufnahmen (8) zeigen, die Breite (BR) jedes Rastfingers (5, 6) kleiner als die Breite (BZ) der Zwischenwand (4, 4') ist und der erste Rastfinger (5) gegenüber dem zweiten Rastfinger (6) so versetzt angeordnet ist, daß sich keine Überlappung ergibt, **dadurch gekennzeichnet, daß** die Zwischenwand (4, 4') zwischen den versetzten Rastfingern (5, 6) derart gekröpft ist, daß durch die Kröpfung ausreichend Raum für das Zurückweichen der Rastfinger (5, 6) während des Einsetzens eines länglichen Gegenstands (2) bereitgestellt wird .

2. Halteclip (1) nach Anspruch 1, **dadurch gekennzeichnet, daß** der erste Rastfinger (5) seitlich versetzt zum zweiten Rastfinger (6) angeordnet ist, insbesondere mit einem Abstand (A) von 5 bis 20 % der Breite (BZ) der Zwischenwand (4, 4'), vorzugsweise mit einem Abstand (A) von 10 bis 15 % der Breite (BZ) der Zwischenwand (4, 4').

3. Halteclip (1) nach einem der vorhergehenden Ansprüche, **dadurch gekennzeichnet, daß** die Zwischenwand (4, 4') eine Öffnung (13), insbesondere einen Schlitz, aufweist.

4. Halteclip (1) nach einem der vorhergehenden Ansprüche, **dadurch gekennzeichnet, daß** auf beiden Seiten (11, 12) der Zwischenwand (4, 4') jeweils zwei oder mehr höhenversetzte Rastfinger (5, 5', 6, 6') angeordnet sind.

5. Halteclip (1) nach einem der vorherigen Ansprüche, **dadurch gekennzeichnet, daß** das Verhältnis der Breite (BR) eines einzelnen Rastfingers (5, 6) zur Breite (BZ) der Zwischenwand (4, 4') zwischen 1:4 und 1:2 liegt, insbesondere etwa 2:5 beträgt.

6. Halteclip (1) nach einem der vorherigen Ansprüche, **gekennzeichnet durch** Außenwände (7), die zur Sicherung der länglichen Gegenstände (2) mindestens einen Rastfinger (5, 6) aufweisen.

7. Halteclip (1) nach einem der vorherigen Ansprüche, **gekennzeichnet durch** Außenwände (7), die **durch** Verstärkungsstrukturen (9) verstärkt sind.

8. Halteclip (1) nach einem der vorherigen Ansprüche, **dadurch gekennzeichnet, daß** der Halteclip (1) aus elastischem Material, insbesondere aus Kunststoff, gefertigt ist.

## Claims

1. Retaining clip (1) for, in particular, simultaneous fastening of a plurality of approximately parallel-running, elongate articles (2) to a structure, in particular for the fastening of lines, pipes or cables, having a base part (3), in which receivers (8) for the elongate articles (2) are formed, having at least one partition (4, 4') between two such receivers (8), which comprises a front side (12) and a rear side (11), wherein there are provided for securing the elongate articles (2) in the, receivers (8) at least one first latching finger (5) at the front side (12) and at least one second latching finger (6) at the rear side (11) of the partition (4, 4'), wherein the latching fingers (5, 6) point in the direction of the respective receivers (8), the width (BR) of each latching finger (5, 6) is smaller than the width (BZ) of the partition (4, 4') and the first latching finger (5) is arranged offset relative to the second latching finger (6) in such a way that no overlapping occurs, **characterised in that** the partition (4, 4') is elbowed in such a way between the offset latching fingers (5, 6), that the elbow provides enough space for yielding of the latching fingers (5, 6) during introduction of an elongate article (2).

2. Retaining clip (1) according to claim 1, **characterised in that** the first latching finger (5) is arranged laterally offset relative to the second latching finger (6), in particular at a distance (A) of 5 to 20% of the width (BZ) of the partition (4, 4'), preferably at a distance (A) of 10 to 15% of the width (BZ) of the partition (4, 4').

3. Retaining clip (1) according to any one of the preceding claims, **characterised in that** the partition (4, 4') has an opening (13), in particular a slot.

4. Retaining clip (1) according to any one of the preceding claims, **characterised in that** on both sides (11, 12) of the partition (4, 4') two or more vertically offset latching fingers (5, 5', 6, 6') are disposed respectively.

5. Retaining clip (1) according to any one of the preceding claims, **characterised in that** the ratio of the width (BR) of an individual latching finger (5, 6) to the width (BZ) of the partition (4, 4') is between 1:4 and 1:2, in particular approximately 2:5.

6. Retaining clip (1) according to any one of the preceding claims, **characterised by** outer walls (7), which for securing the elongate articles (2) have at least one latching finger (5, 6).

7. Retaining clip (1) according to any one of the preceding claims, **characterised by** outer walls (7), which are reinforced by reinforcing structures (9).

8. Retaining clip (1) according to any one of the preceding claims, **characterised in that** the retaining clip (1) is made of elastic material, in particular of plastics material.

## Revendications

1. Clip de fixation (1) pour la fixation, en particulier simultanée, d'une pluralité d'objets (2), allongés et s'étendant à peu près parallèlement, sur une structure, en particulier de conduites, de tubes ou de câbles, avec une partie de base (3), dans laquelle des logements (8) pour des objets (2) allongés sont réalisés, avec au moins une paroi intermédiaire (4, 4') entre deux logements (8) de ce type, paroi présentant une face avant (12) et une face arrière (11), sachant que, pour maintenir les objets (2) allongés dans les logements (8), est prévu au moins un premier doigt d'encliquetage (5) en face avant (12) et au moins un deuxième doigt d'encliquetage (6) en face arrière (11) de la paroi intermédiaire (4'), les doigts d'encliquetage (5, 6) étant orientés dans la direction des logements (8) respectifs, la largeur (BR) de chaque doigt d'encliquetage (5, 6) étant inférieure à la largeur (BZ) de la paroi intermédiaire (4, 4'), et le premier doigt d'encliquetage (5) est décalé par rapport au deuxième doigt d'encliquetage (6) de manière qu'il ne se produise aucun chevauchement, **caractérisé en ce que** la paroi intermédiaire (4, 4') entre les doigts d'encliquetage (5, 6) décalés est coudée, de manière que, par le coudage, suffisamment de place soit fournie pour l'effacement par rétraction des doigts d'encliquetage (5, 6) pendant l'insertion d'un objet (2) allongé.

2. Clip de fixation (1) selon la revendication 1, **caractérisé en ce que** le premier doigt d'encliquetage (5) est décalé latéralement par rapport au deuxième doigt d'encliquetage (6), en particulier avec un espacement (A) de 5 à 20 % de la largeur (BZ) de la paroi intermédiaire (4, 4'), de préférence avec un espacement (A) de 10 à 15 % de la largeur (BZ) de la paroi intermédiaire (4, 4').

3. Clip de fixation (1) selon l'une des revendications précédentes, **caractérisé en ce que** la paroi intermédiaire (4, 4') présente une ouverture (13), en particulier une fente.

4. Clip de fixation (1) selon l'une des revendications précédentes, **caractérisé en ce que**, sur chacune des deux faces (11, 12) de la paroi intermédiaire (4, 4'), sont disposés deux doigts d'encliquetage (5, 5', 6, 6') ou plus, décalés en hauteur.

5. Clip de fixation (1) selon l'une de revendications précédentes, **caractérisé en ce que** le rapport, entre la largeur (BR) d'un doigt d'encliquetage (5, 6) individuel et la largeur (BZ) de la paroi intermédiaire (4, 4'), est situé entre 1:4 et 1:2, en particulier est d'environ 2:5.

6. Clip de fixation (1) selon l'une des revendications précédentes, **caractérisé par** des parois extérieures (7), présentant au moins un doigt d'encliquetage (5, 6) pour maintenir l'objet (2) allongé.

7. Clip de fixation (1) selon l'une des revendications précédentes, **caractérisé par** des parois extérieures (7), renforcées par des structures de renforcement (9).

8. Clip de fixation (1) selon l'une des revendications précédentes, **caractérisé en ce que** le clip de fixation (1) est fabriqué en matériau élastique, en particulier en matière plastique.
